# EUROPEAN PATENT APPLICATION

(11) **EP 2 537 811 A1**
(43) Date of publication of application: **26.12.2012**
(21) Application number: 11744672.4
(22) Date of filing: 16.02.2011
(51) Int. Cl.: C02F 1/46

(54) **ELECTROLYZED WATER GENERATION DEVICE**

(30) Priority: 16.02.2010 JP 2010031646
(71) Applicant: Hoshizaki Denki Kabushiki Kaisha, Aichi 470-1194 (JP)
(72) Inventor: ITO, Isao, Toyoake-shi Aichi 470-1194 (JP); FUJITA, Masahiro, Toyoake-shi Aichi 470-1194 (JP); HATATA, Kouji, Toyoake-shi Aichi 470-1194 (JP); KATAYOSE, Masahiko, Toyoake-shi Aichi 470-1194 (JP); ISHIKAWA, Yusuke, Toyoake-shi Aichi 470-1194 (JP); YOSHIDA, Kyoichiro, Toyoake-shi Aichi 470-1194 (JP)
(74) Representative: Kramer - Barske - Schmidtchen
(86) International application number: PCT/JP2011/053282
(87) International publication number: WO 2011/102386

(57) **Abstract**

In order to reduce the number of structural components, the size and the cost of an electrolyzed water producing apparatus, an electrolyzed water producing apparatus is equipped with a system in which the start and stop of the operation of an electrolyzer cell in the apparatus is controlled in accordance with the open/close operation of a water feed valve interposed in a raw water feed conduit for feeding raw water to the electrolyzer cell. An electrolyzed water producing apparatus comprises: an electrolyzer cell subdivided into an electrolyzing anode chamber and an electrolyzing cathode chamber with a partition membrane; a raw water feed conduit for feeding raw water from a water supply source to the electrolyzing chambers of the electrolyzer cell; a water feed valve interposed in the raw water feed conduit; a brine feed conduit connected to the raw water feed conduit; a brine feed pump interposed in the way of the brine feed conduit; a control means for start/stop controlling the operation of the electrolyzer cell in accordance with on/off condition of the water feed valve and for controlling the operation of the brine feed pump in order to regulate the concentration of water to be electrolyzed as fed to the electrolyzer cell; a diluting water feed conduit bifurcated from the raw water feed conduit at a point downstream of the water feed valve; and a communicating conduit connecting one of the electrolyzing chambers to the diluting water feed conduit for diluting electrolyzed water discharging from the one of the electrolyzing chambers with the raw water diverging from the raw water feed conduit and flowing through the diluting water feed conduit when the electrolyzer cell is in operation, wherein a percentage of the raw water diverging from the raw water feed conduit into the diluting water feed conduit is regulated to accordingly regulate a concentration of the diluted electrolyzed water to be taken out.

## Description

### TECHNICAL FIELD

The present invention relates to an electrolyzed water producing apparatus, and more particularly to an electrolyzed water producing apparatus in which electrolyzed water produced in an electrolyzer cell is diluted to a predetermined concentration with a part of raw water to be fed to the electrolyzer cell to provide a suitable concentration of the electrolyzed water for use.

### BACKGROUND INFORMATION

Among electrolyzed water producing apparatuses in which electrolyzed water produced in an electrolyzer cell is diluted to a predetermined concentration with a part of raw water to be fed to the electrolyzer cell to provide a suitable concentration for use, a type of electrolyzed water producing apparatus in which approximately neutral electrolyzed water produced in an electrolyzer cell without a partition membrane is diluted to a predetermined concentration with a part of the raw water that is supplied to provide water to be electrolyzed is disclosed in patent documents #1, #2 and #3 listed below. Another type of electrolyzed water producing apparatus in which electrolyzed water produced in one of the electrolyzing chambers of an electrolyzer cell with a partition membrane is diluted to a predetermined concentration with a part of the raw water that is supplied to provide water to be electrolyzed is disclosed in patent document #4 listed below.

Patent document #4, however, discloses the structure and the operation of such an electrolyzed water producing apparatus only in principle, and discloses nothing about how to control the start and stop of the operation of the electrolyzer cell in the electrolyzed water producing apparatus. Among this type of electrolyzed water producing apparatus, different ways of control of the start and stop of the operation of the electrolyzer cell would necessitate different control arrangements.
Patent Document #1 : Unexamined Japanese Patent Publication No. 2001-137853
Patent Document #2: Unexamined Japanese Patent Publication No. 2001-286867
Patent Document #3: Unexamined Japanese Patent Publication No. 2006-15220
Patent Document #4: Unexamined Japanese Patent Publication No. H4-42077

### SUMMARY OF THE INVENTION

An object of the present invention is to provide an electrolyzed water producing apparatus in which the start and stop of the operation of the electrolyzer cell is controlled in accordance with the open/close operation of a water feed valve interposed in a raw water feed conduit for feeding raw water to the electrolyzer cell, thereby reducing the number of the structural components, the size and the cost of an electrolyzed water producing apparatus.

According to the present invention, the object is accomplished by providing an electrolyzed water producing apparatus comprising: an electrolyzer cell subdivided into an electrolyzing anode chamber and an electrolyzing cathode chamber with a partition membrane; a raw water feed conduit for feeding raw water from a water supply source to the electrolyzing chambers of the electrolyzer cell; a water feed valve interposed in the raw water feed conduit; a brine feed conduit connected to the raw water feed conduit; a brine feed pump interposed in the brine feed conduit; and a control means for start/stop controlling the operation of the electrolyzer cell in accordance with on/off condition of the water feed valve and for controlling the operation of the brine feed pump in order to regulate a concentration of water to be electrolyzed which is provided by mixing the brine fed from the brine feed conduit and the raw water fed from the raw water feed conduit, characterized in that the apparatus further comprises: a diluting water feed conduit bifurcated from the raw water feed conduit at a point downstream of the water feed valve; and a communicating conduit connecting one of the electrolyzing chambers to the diluting water feed conduit for diluting electrolyzed water discharging from the one of the electrolyzing chambers with the raw water diverging from the raw water feed conduit and flowing through the diluting water feed conduit when the electrolyzer cell is in operation, wherein a percentage of the raw water diverging from the raw water feed conduit into the diluting water feed conduit is regulated to accordingly regulate the concentration of the diluted electrolyzed water to be taken out for use.

In practicing the present invention, it is preferable that a flow rate variable valve and a flowmeter are interposed in the diluting water feed conduit to regulate the flow rate of the raw water to be mixed to the electrolyzed water, so that the concentration after the dilution of the electrolyzed water which has discharged from the electrolyzer cell can be regulated. Further, in another embodiment of the present invention, a negative pressure generating device such as an aspirator may be interposed at a point where the communicating conduit is connected to the diluting water feed conduit to thereby generate a negative pressure to suck the electrolyzed water from the communicating conduit.

In practicing the present invention, further, a control device may be provided for controlling the mixing ratio between the electrolyzed water and the raw water in a mixture of the electrolyzed water and the raw water, in accordance with the nature of the electrolyzed water discharging from the one of the electrolyzing chambers into the diluting water feed conduit through the communicating conduit. Still further, a control device may be provided for controlling the mixing ratio between the electrolyzed water discharging from the one of the electrolyzing chambers and the raw water supplied to the diluting water feed conduit for the diluting water, in accordance with the operating conditions of the electrolyzer cell.

### USEFUL EFFECT OF THE INVENTION

As the abovementioned electrolyzed water producing apparatus according to the present invention comprises a control means for start/stop controlling the operation of the electrolyzer cell in accordance with the on/off condition of the water feed valve and for controlling the operation of the brine feed pump in order to regulate the concentration of water to be electrolyzed which is provided by mixing the brine fed from the brine feed conduit and the raw water fed from the raw water feed conduit, and the percentage of the raw water diverging from the raw water feeding main conduit into the diluting water feed conduit is regulated to accordingly regulate the concentration of the diluted electrolyzed water to be taken out for use, an electrolyzed water producing apparatus capable of producing electrolyzed water diluted to a desired concentration can be manufactured with a smaller number of components, in a smaller size and at a lower cost than conventional electrolyzed water producing apparatuses.

In addition, with a flow rate variable valve and a flowmeter interposed in the diluting water feed conduit, the feeding flow rate of the raw water to be used for diluting the electrolyzed water can be properly regulated by adjusting the flow rate variable valve in accordance with the flow rate measured by the flowmeter, whereby the electrolyzed water discharging from the one of the electrolyzing chambers of the electrolyzer cell can be diluted to a desired concentration while the electrolyzed water of a predetermined concentration can be taken out intact from the other electrolyzing chamber of the electrolyzer cell.

Still further, with a negative pressure generating device interposed at the point where the communicating conduit is connected to the diluting water feed conduit to thereby generate a negative pressure to suck the electrolyzed water from the communicating conduit, it will not be necessary to dispose a feed pump and a flow rate variable valve for forcing the electrolyzed water to flow from the electrolyzing chamber to the communicating conduit. The raw water will be mixed with the electrolyzed water nevertheless stably, even if the flow rate of the raw water fed through the flow rate variable valve interposed in the diluting water feed conduit may vary to some extent, and hence the concentration of the diluted electrolyzed water can be properly regulated.

The pH and the flow rate of the electrolyzed water can be computed according to the conditions of electrolyzing operation such as the values of the current and voltage for electrolyzation, the temperature and the pressure of the water to be electrolyzed, the inner diameters of the feed conduits, and the specifications of the electrodes being used, and hence the concentration of the diluted electrolyzed water taken out from the outlet can be properly controlled.

### BRIEF DESCRIPTION OF THE DRAWINGS

In the accompanying drawings:
Fig. 1 is a front view of an electrolyzed water producing apparatus according to the present invention;
Fig. 2 is a front view of the electrolyzed water producing apparatus of Fig. 1 with its front cover constituting the housing of the electrolyzed water producing apparatus removed and its partition board carrying electric components also removed;
Fig. 3 is a schematic block diagram illustrating the system configuration of the electrolyzed water producing apparatus;
Fig. 4 is a cross-sectional vertical view of a suction negative pressure generator unit interposed in the raw water feed conduit comprised in the electrolyzed water producing apparatus;
Fig. 5 is a front view of a water flow change-over unit for the electrolyzer cell in the electrolyzed water producing apparatus;
Fig. 6 is a front view of a water flow change-over unit of another embodiment for the electrolyzer cell in the electrolyzed water producing apparatus; and
Fig. 7 is a front view of a brine feeding arrangement for the electrolyzer cell in the electrolyzed water producing apparatus.

### EMBODIMENTS FOR PRACTICING THE INVENTION

Hereinafter will be described an embodiment of the electrolyzed water producing apparatus according to the present invention with reference to the accompanying drawings. An electrolyzed water producing apparatus of this embodiment is so configured as to produce electrolyzed acidic water in an electrolyzing anode chamber of an electrolyzer cell 11, which acidic water in turn is diluted with raw water supplied from a water supply source (e.g. tap water or city service water) to a concentration controlled to be suitable for use before taken out from an outlet, and to produce electrolyzed alkaline water in an electrolyzing cathode chamber of the electrolyzer cell 11, which alkaline water in turn is drained out without being diluted.

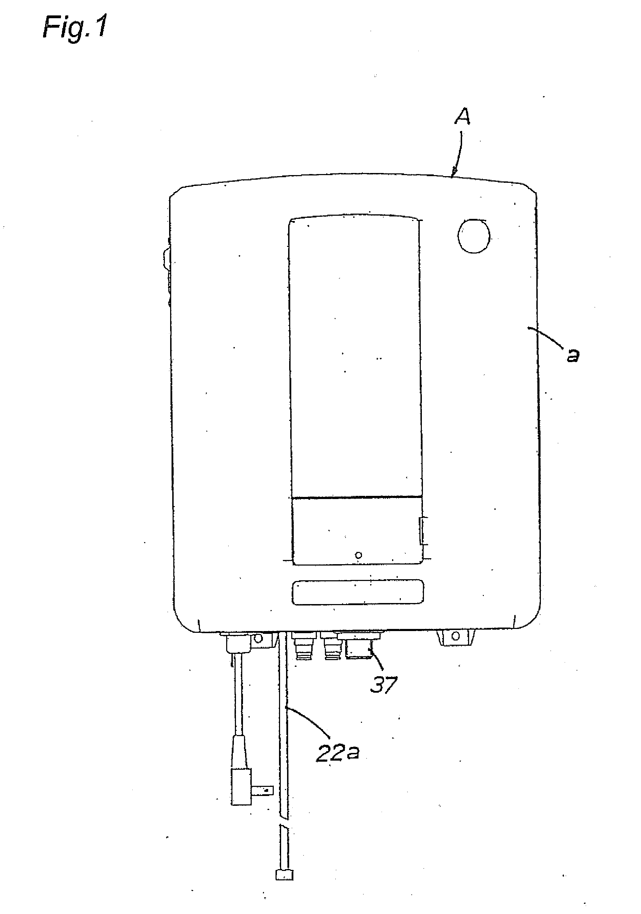

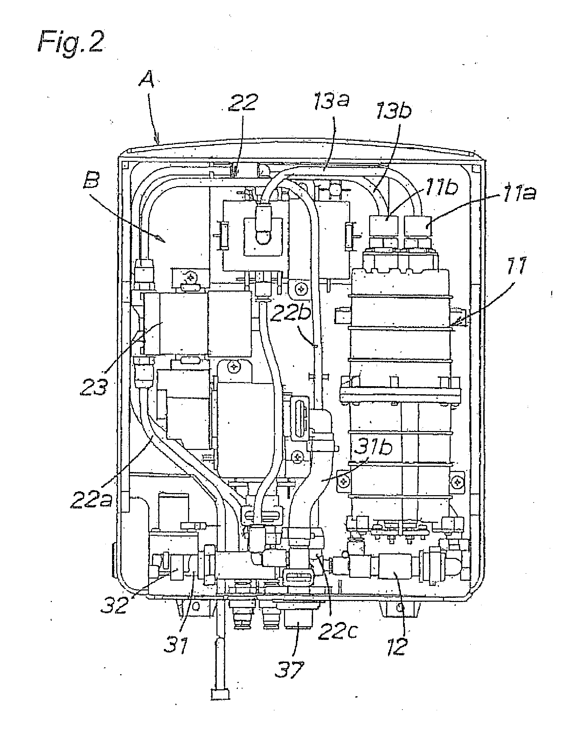

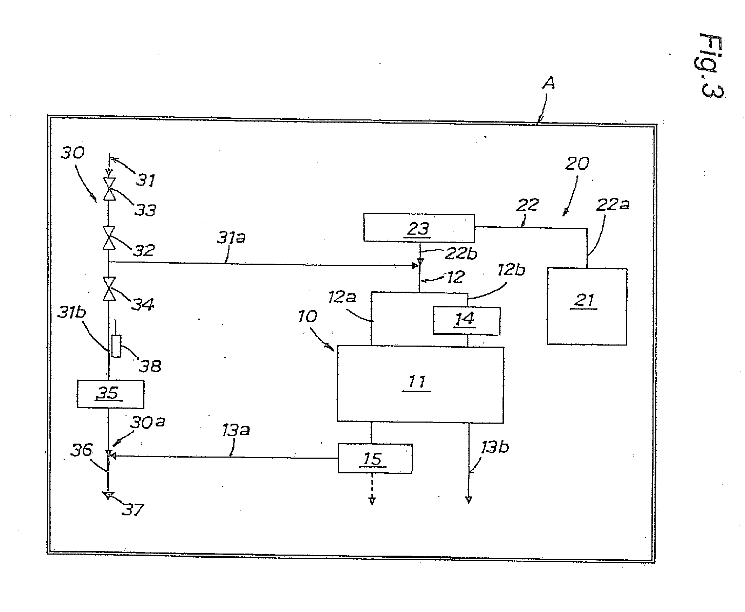

The electrolyzed water producing apparatus of this embodiment comprises a housing A constituting an outer shell of the apparatus as shown in Fig. 1, an assembly B of structural components of water flowing arrangements for the electrolyzer cell 11 as shown in Fig. 2, and a partition board carrying electric components (not shown), which assembly B and which board are contained in the housing A. As shown in Fig. 3, the apparatus is composed of an electrolyzed water producing arrangement 10 which produces electrolyzed water, a brine feeding arrangement 20 which feeds brine (salt water) of a high concentration, and a raw water supplying arrangement 30 which supplies raw water (tap water or city service water) to the electrolyzed water producing arrangement 10.

The electrolyzed water producing arrangement 10 includes as its main element an electrolyzer cell 11 having a partition membrane and subdivided into an electrolyzing anode chamber and an electrolyzing cathode chamber with the partition membrane, and also includes a feed conduit 12 (12a and 12b) connected to the anode chamber and the cathode chamber in their upper stream side to feed water to be electrolyzed to the chambers, and discharge conduits 13a and 13b connected to the anode chamber and the cathode chamber, respectively, in their down stream side to discharge electrolyzed acidic water and electrolyzed alkaline water, respectively.

The brine feeding arrangement 20 includes a brine tank 21 containing brine (salt water) of a predetermined high concentration, a brine feed conduit 22 connecting the brine tank 21 and the inlet port of the feed conduit 12 of the water to be electrolyzed, and a brine feed pump 23 interposed in the way of the brine feed conduit 22. The brine feeding arrangement 20 is to feed brine of a predetermined concentration to the feed conduit 12 of water to be electrolyzed at a constant rate of flow through the brine feed conduit 22 by running the brine feed pump 23 when the electrolyzer cell is in operation. The brine tank 21 is placed outside the housing A, and is connected to the inlet port of the brine feed pump 23 via the upstream part 22a of the brine feed conduit 22. The outlet port of the brine feed pump 23 is connected to the feed conduit 12 of water to be electrolyzed via the downstream part 22b of the brine feed conduit 22. With this structure, the brine feed conduit 22 connects the brine tank 21 and the feed conduit 12 of the water to be electrolyzed, and the brine feed pump 23 is positioned in the midway of the brine feed conduit 22. In Fig. 2, reference character 22c denotes a coupling point where the downstream part 22b of the brine feed conduit 22 is connected to the feed conduit 12 of water to be electrolyzed.

The feeding of brine from the brine tank 21 to the feed conduit 12 of water to be electrolyzed is continued from the start till the stop of the operation of the electrolyzer cell, and the continuously fed brine is diluted with the raw water which is continuously fed from the raw water feed conduit 31 a to the feed conduit 12 of water to be electrolyzed to a predetermined concentration, thereby regulating the concentration of the diluted brine (i.e. the water to be electrolyzed).

The raw water supplying arrangement 30 includes as its main element a raw water feeding main conduit 31 to which is supplied raw water from a water supply source (not shown), and also includes a pressure reducing valve 33 and a water feed valve 32 both interposed in the water feeding main conduit 31. The raw water feed conduit 31 a is connected to the water feeding main conduit 31 at a point downstream of the water feed valve 32, while a diluting water feed conduit 31b is bifurcated from the water feeding main conduit 31 at the point where the raw water feed conduit 31 a is connected to the water feeding main conduit 31, and in the diluting water feed conduit 31b are interposed a flow rate variable valve 34 and a flowmeter 35. The raw water feed conduit 31a in turn is connected to the feed conduit 12 of water to be electrolyzed, so that the raw water supplied from the water supply source via the raw water feeding main conduit 31 when the water feed valve 32 is opened is admixed with the brine flowing out from the brine pump 23, thereby providing diluted brine of a predetermined low concentration as the water to be electrolyzed. The diluting water feed conduit 31b is connected to the electrolyzing anode chamber of the electrolyzer cell 11 via a communicating conduit 13a, which is the discharging conduit from the anode chamber, in the way of which a three-way change-over valve 15 is interposed. Electrolyzed acidic water discharging from the electrolyzing anode chamber through the communicating conduit 13a while the electrolyzer cell 11 is in operation is diluted by being mixed with the raw water fed through the diluting water feed conduit 31 b, and the diluted electrolyzed acidic water is taken out from an outlet 37.

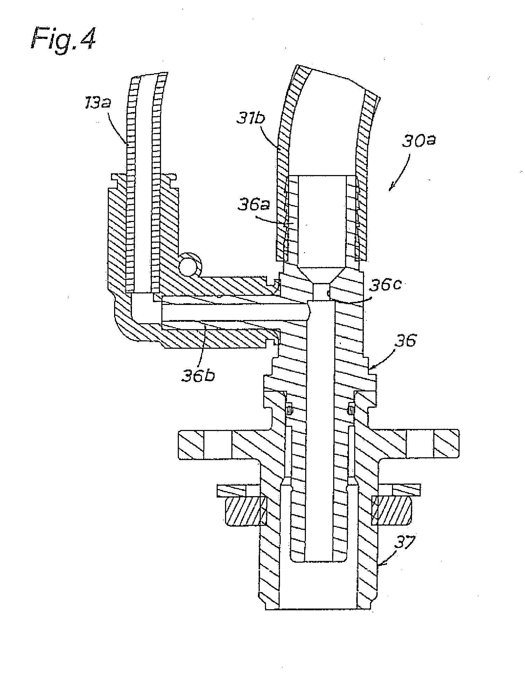

At the coupling point of the diluting water feed conduit 31b and the communicating conduit 13a through which the electrolyzed water flows is disposed a negative pressure generating device 30a for generating a negative pressure to suck the electrolyzed water from the communicating conduit 13a. The negative pressure generating device 30a is constituted by an aspirator 36 as shown in Fig. 4, which aspirator 36 comprises a main bore part 36a and a branch bore part 36b bifurcating from the main bore part 36a, wherein the main bore part 36a is connected to the end of the diluting water feed conduit 31b and the branch bore part 36b is connected to the end of the communicating conduit 13a through which the electrolyzed water flows. The outlet 37 is provided at the lower end of the main bore part 36a.

In the negative pressure generating device 30a of the above-mentioned structure, the raw water flowing from the diluting water feed conduit 31b causes a negative pressure when it passes a throttle part 36c formed in the way of the main bore part 36a. The generated negative pressure acts so as to suck, or aspirate, the electrolyzed acidic water flowing through the communicating conduit 13a. The electrolyzed acidic water flowing out from the communicating conduit 13a now flows into the main bore part 36a at a rate according to the flow rate (amount of flow per unit time) of the raw water which flows through the diluting water feed conduit 31b. In Fig. 3, the reference character "38" denotes a thermistor and the reference character "14" denotes a flowmeter disposed in the way of the feed conduit 12 of the water to be electrolyzed. The three-way change-over valve 15 interposed in the communicating conduit 13a for discharging the electrolyzed acidic water is to be changed over to the position for draining, or exhausting, the electrolyzed acidic water in the operation mode for washing the interior of the electrolyzer cell 11.

The electrolyzed water producing apparatus of the above-mentioned configuration is controlled in its electrolyzing operation by a control system (not shown) so that the start and stop of the operation of the electrolyzer cell 11 is controlled according to the open/close operation of the water feed valve 32 interposed in the raw water feeding main conduit 31 of the raw water supplying arrangement 30. When the operation of the electrolyzer cell 11 is started, the raw water supplied from the water supplying source to the raw water feeding main conduit 31 in the raw water supplying arrangement 30 is fed dividedly to the raw water feed conduit 31a and to the diluting water feed conduit 31b. The division ratio of the raw water is herein predetermined at a certain division ratio according to the position at which the two feed conduits 31a and 31 b are bifurcated, the intra-conduit resistances of the two feed conduits 31a and 31 b, and so forth.

The ratio between the amount of flow per unit time F1 of the raw water supplied to the raw water feed conduit 31a and the amount of flow per unit time F2 of the raw water supplied to the diluting water feed conduit 31b is set to be the division ratio of F1 : F2 = 1 : 1 through 1 : 3. With this, the amount of the electrolyzed alkaline water to be produced in the electrolyzer cell 11 and exhausted therefrom is made minimal. In addition, the division ratio between the flow rate F1 of the raw water to flow in the raw water feed conduit 31a and the flow rate F2 of the raw water to flow in the diluting water feed conduit 31b can be varied to a desired ratio by variably operating the flow rate variable valve 34 interposed in the diluting water feed conduit 31 b.

In order to use the electrolyzed water producing apparatus described above, the user operates a water flow-out switch (not shown) to open the water feed valve 32, which starts the electrolyzing operation of the apparatus. The control system included in the electrolyzed water producing apparatus detects the opening of the water feed valve 32 and starts the electrolyzing operation of the apparatus. Then, diluted brine prepared by mixing the raw water and the brine, which mixture is the water to be electrolyzed, is continuously fed to each of the electrolyzing chambers of the electrolyzer cell 11, and is electrolyzed under certain conditions for electrolyzation in the electrolyzer cell 11.

During the electrolyzing operation, the electrolyzing anode chamber of the electrolyzer cell 1 produces electrolyzed acidic water, which in turn is fed through the communicating conduit 13a to the diluting water feed conduit 31b, and the electrolyzing cathode chamber produces electrolyzed alkaline water, which is drained through the discharge conduit 13b. The electrolyzed acidic water flowing through the communicating conduit 13a is sucked by the negative pressure generated by the raw water flowing through the throttle part 36c provided in the main bore part 36a of the negative pressure generating device 30a and is admixed with the raw water flowing as the diluting water in the diluting water feed conduit 31b to be diluted to a predetermined concentration before discharging from the outlet 37.

The electrolyzing operation of the electrolyzed water producing apparatus stops under the control of the control system when the user closes the water feed valve 32. The water feed valve 32 may be designed to automatically close when a predetermined time has passed since the start of the electrolyzing operation.

As will be understood from the description about the above embodiment, an electrolyzed water producing apparatus according to the present invention has the following advantages.
(1) The control system controls the start and stop of the electrolyzer cell 11 according to the open/close operation of the water feed valve 32 and controls the operation of the brine feed pump 23 for regulating the concentration of the water to be electrolyzed which is prepared by mixing the brine supplied from the brine feed conduit 22 and the raw water supplied from the raw water feed conduit 31a, and the percentage of the raw water diverging from the raw water feeding main conduit 31 into the diluting water feed conduit 31 b is regulated to accordingly regulate the concentration of the diluted electrolyzed water to be taken out. An electrolyzed water producing apparatus capable of producing electrolyzed water which is diluted to a desired concentration can hence be manufactured with a smaller number of components, in a smaller size, and at a lower cost than conventional electrolyzed water producing apparatuses.
(2) The flow rate variable valve 34 and the flowmeter 35 are interposed in the diluting water feed conduit 31b, and hence the flow rate of the raw water for diluting the electrolyzed water can be regulated properly by controlling the flow rate variable valve 34 in accordance with the flow rate, measured by the flowmeter 35, of the raw water being fed for diluting the electrolyzed water. Then the electrolyzed water (acidic water) discharged from the one electrolyzing chamber of the electrolyzer cell 11 can be taken out for use with the concentration properly diluted to a desired level, while the electrolyzed water discharged from the other electrolyzing chamber of the electrolyzer cell is taken out with a predetermined concentration.
(3) With the negative pressure generating device disposed at the connection point of the diluting water feed conduit 31b and the communicating conduit 13a for sucking the electrolyzed water flowing through the communicating conduit, it is not necessary to interpose a water feed pump and a flow rate adjusting valve for flowing out the electrolyzed water from the electrolyzing chamber. Even if the flow rate of the raw water supplied through the flaw rate variable valve 34 interposed in the diluting water feed conduit 31b may fluctuate, the raw water will be admixed to the electrolyzed water stably, and the concentration of the diluted electrolyzed water will be regulated properly.

(4) The pH and the flow rate of the electrolyzed water can be computed according to the conditions of electrolyzing operation such as the values of current and voltage for electrolyzation, the temperature and the pressure of the water to be electrolyzed, the inner diameters of the feed conduits, and the specifications of the electrodes being used, and hence the concentration of the diluted electrolyzed water taken out from the outlet can be properly controlled.

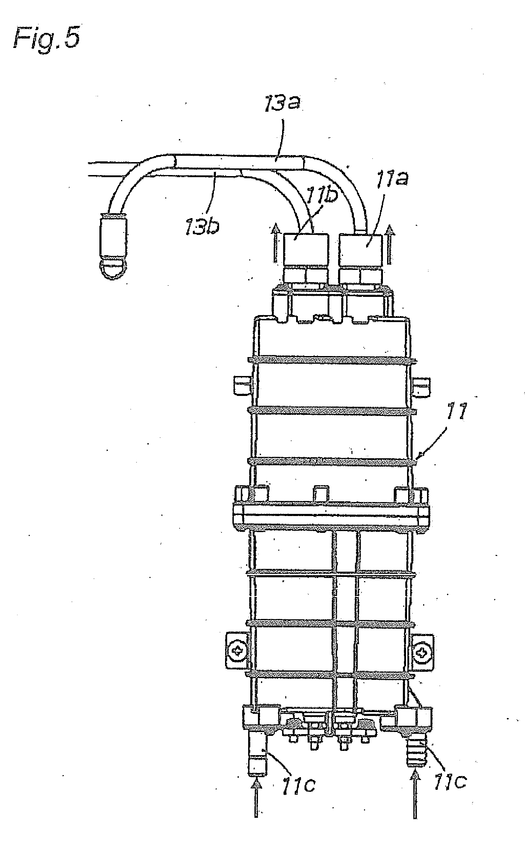

In practicing the present invention, the apparatus may be so configured that the use of the two kinds of electrolyzed water produced in the electrolyzer cell 11 can be selectively changed over. In the case of the electrolyzer cell 11 with a partition membrane as shown in Fig. 5, an outlet 11a of the electrolyzed acidic water disposed at the electrolyzing anode chamber and an outlet 11b of the electrolyzed alkaline water disposed at the electrolyzing cathode chamber are configured to be selectively connectable to the discharge conduits 13a and 13b, respectively, or to 13b and 13a, respectively. When the discharge conduit 13a of the electrolyzed acidic water is connected to the outlet 11b of the electrolyzed alkaline water from the electrolyzing cathode chamber and the discharge conduit 13b of the electrolyzed alkaline water is connected to the outlet 11a of the electrolyzed acidic water from the electrolyzing anode chamber, the discharge conduit 13a functions as a discharge conduit for flowing out the electrolyzed alkaline water and the discharge conduit 13b functions as a discharge conduit for flowing out electrolyzed acidic water. Thus the two kinds of electrolyzed water can be selectively used. In such an instance, the apparatus can be so configured that the electrolyzed alkaline water is to be fed to the diluting water feed conduit 31b through the discharge conduit 13a, where the electrolyzed alkaline water will be diluted with the raw water to an intended concentration so that properly diluted electrolyzed alkaline water can be taken out for use.

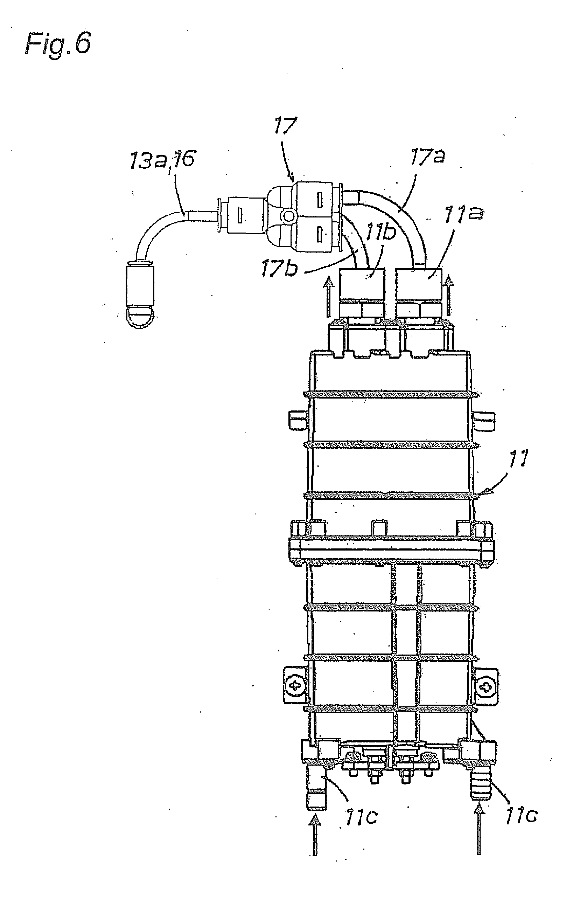

In the case of the electrolyzer cell 11 with a partition membrane as shown in Fig. 6, the outlet 11a of the electrolyzed acidic water from the electrolyzing anode chamber and the outlet 11b of the electrolyzed alkaline water from the electrolyzing cathode chamber are configured to be selectively connectable to bifurcated (inlet) conduits 17a and 17b of a Y-shaped joint pipe 17 having a merging outlet. If the discharge conduit 13a or another discharge conduit 16 is connected to the merging outlet of the Y-shaped joint pipe 17, the electrolyzed acidic water and the electrolyzed alkaline water produced by the electrolyzer cell 11 are delivered in a mixed state to the discharge conduit 13a or 16, which means electrolyzed water of substantially neutral in pH can be taken out for use.

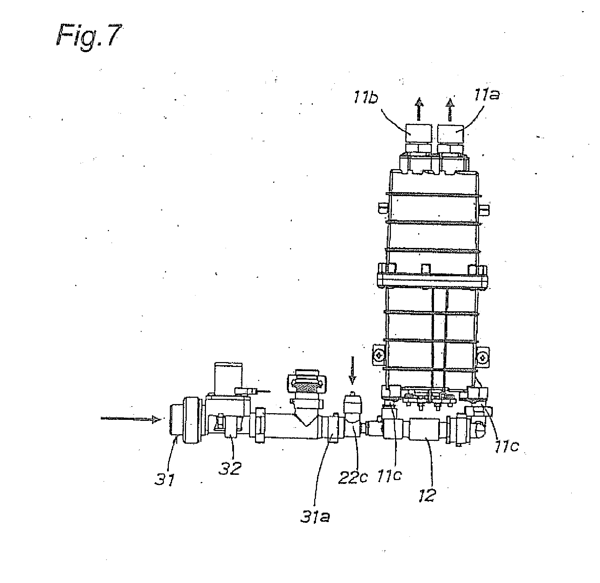

In the electrolyzed water producing apparatus according to the present invention, the brine (electrolytic solution) pumped out from the brine feed pump 23 may contain some gas, and such gas may flow into the feed conduit 12 of the water to be electrolyzed together with the pumped brine. Supposing such a possibility, the apparatus is configured to evacuate the possibly contained gas. For this purpose, as shown in Fig. 7, the coupling point 22c of the brine feed conduit and the down stream end of the raw water feed conduit 31a is connected to the inlet port of the feed conduit 12 of the water to be electrolyzed, and is positioned at a level substantially even with the raw water feed conduit 31a, the water path thereafter and up to an inlets 11c of the water to be electrolyzed into the electrolyzing chambers being kept horizontal or ascendingly inclined. Thus the gas introduced together with the brine will move along with the flow of the water to be electrolyzed in accordance with the plumbing configuration of the raw water feed conduit 31a and the feed conduit 12 of the water to be electrolyzed into the respective electrolyzing chambers of the electrolyzer cell 11 smoothly, and will finally be evacuated from the electrolyzing chambers together with the electrolyzed water.

### DESCRIPTION OF THE REFERENCE CHARACTERS

A: housing; a: front cover; B: assembly of structural components; 10: electrolyzed water producing arrangement; 11: electrolyzer cell with partition membrane; 11a, 11b: outlet of electrolyzed water; 11c: inlet of water to be electrolyzed; 12 (12a, 12b): feed conduit of water to be electrolyzed; 12c: flowmeter; 13a: discharge conduit of electrolyzed acidic water; 13b: discharge conduit of electrolyzed alkaline water; 14: flowmeter; 15: three-way change-over valve; 16: discharge conduit; 17: Y-shaped joint pipe; 17a, 17b: bifurcated conduit; 20: brine feeding arrangement; 21: brine tank; 22: brine feed conduit; 22a: upstream part; 22b: downstream part; 22c: coupling point of brine feed conduit; 23: brine feed pump; 30: raw water supplying arrangement; 30a: suction negative pressure generating device; 31: raw water feeding main conduit; 31a: raw water feed conduit; 31b: diluting water feed conduit; 32: water feed valve; 33: pressure reducing valve; 34: flow rate variable valve; 35: flowmeter; 36: member for generating negative pressure.

## Claims

1. An electrolyzed water producing apparatus comprising:
an electrolyzer cell subdivided into an electrolyzing anode chamber and an electrolyzing cathode chamber with a partition membrane;
a raw water feed conduit for feeding raw water from a water supply source to the electrolyzing chambers of the electrolyzer cell;
a water feed valve interposed in the raw water feed conduit;
a brine feed conduit connected to the raw water feed conduit;
a brine feed pump interposed in the brine feed conduit; and
a control means for start/stop controlling an operation of the electrolyzer cell in accordance with on/off condition of the water feed valve and for controlling an operation of the brine feed pump in order to regulate a concentration of water to be electrolyzed as fed to the electrolyzer cell,
**characterized in that**
the apparatus further comprises:
a diluting water feed conduit bifurcated from the raw water feed conduit at a point downstream of the water feed valve; and
a communicating conduit connecting one of the electrolyzing chambers to the diluting water feed conduit for diluting electrolyzed water discharging from the one of the electrolyzing chambers with the raw water diverging from the raw water feed conduit and flowing through the diluting water feed conduit when the electrolyzer cell is in operation,
wherein a percentage of the raw water diverging from the raw water feed conduit into the diluting water feed conduit is regulated to accordingly regulate a concentration of the diluted electrolyzed water to be taken out.

2. An electrolyzed water producing apparatus as claimed in claim 1, further comprising:
a flow rate variable valve and a flowmeter interposed in the diluting water feed conduit.

3. An electrolyzed water producing apparatus as claimed in claim 1 or 2, further comprising:
a negative pressure generating device at a point where the communicating conduit is connected to the diluting water feed conduit to thereby generate a negative pressure to suck the electrolyzed water from the communicating conduit.

4. An electrolyzed water producing apparatus as claimed in any one of claims 1 - 3, further comprising:
a control device for controlling a mixing ratio between the electrolyzed water and the raw water in a mixture of the electrolyzed water and the raw water, in accordance with a nature of the electrolyzed water discharging from the one of the electrolyzing chambers into the diluting water feed conduit through the communicating conduit.

5. An electrolyzed water producing apparatus as claimed in any one of claims 1 - 4, further comprising:
a control device for controlling a mixing ratio between the electrolyzed water discharging from the one of the electrolyzing chambers and the raw water supplied to the diluting water feed conduit for diluting water, in accordance with an operating condition of the electrolyzer cell.
